# EUROPÄISCHE PATENTSCHRIFT

(11) **EP 3 143 328 B1**
(45) Veröffentlichungstag und Bekanntmachung des Hinweises auf die Patenterteilung: **12.06.2019**
(21) Anmeldenummer: 15717117.4
(22) Anmeldetag: 07.04.2015
(51) Int. Cl.: F21V 11/14, F21V 11/18, F21W 121/00

(54) **ANORDNUNG ZUR ERZEUGUNG VON LICHTEFFEKTEN MIT BESCHATTUNGSFUNKTION**
ARRANGEMENT FOR GENERATING LIGHT EFFECTS HAVING A SHADOWING FUNCTION
SYSTÈME DE GÉNÉRATION D'EFFETS LUMINEUX À FONCTION D'OMBRAGE

(30) Priorität: 12.05.2014 DE 102014106602
(43) Veröffentlichungstag der Anmeldung: 22.03.2017
(73) Patentinhaber: Deutsche Institute für Textil- und Faserforschung Denkendorf, 73770 Denkendorf (DE)
(72) Erfinder: RIETHMÜLLER, Christoph, 71229 Leonberg (DE); BAESCH, Bastian, 70599 Stuttgart (DE); ILLG, Holder, 73240 Wendlingen (DE)
(74) Vertreter: Rüger Abel
(86) Internationale Anmeldenummer: PCT/EP2015/057460
(87) Internationale Veröffentlichungsnummer: WO 2015/172941

(56) Entgegenhaltungen:
- EP-A1- 1 371 897
- WO-A2-2007/144816
- DE-A1- 19 946 015
- US-A- 5 772 314
- US-A1- 2013 058 094

## Beschreibung

Die Erfindung betrifft eine Anordnung zur Erzeugung von Lichteffekten. Eine solche Anordnung ist beispielsweise aus WO 2011/015621 A1 bekannt. Die bekannte Anordnung weist eine Lichtquelle und ein entfernt von der Lichtquelle angeordnetes textiles Flächengebilde auf. Dieses textile Flächengebilde ist als Gewebe ausgeführt und hat eine Kettfadenlage sowie eine Schussfadenlage. Das von der Lichtquelle abgestrahlte Licht kann an den Kettfäden bzw. Schussfäden reflektiert bzw. abgelenkt werden. Auf der von der Lichtquelle abgewandten Betrachtungsseite des Gewebes entsteht dadurch ein Lichtmuster, das einen dreidimensionalen Lichteffekt für den Betrachter erzeugen kann.

Solche Anordnungen werden beispielsweise mit Hilfe von Leuchtdioden oder anderen Lichtquellen beleuchtet. Sie können zu dekorativen Zwecken verwendet werden.

EP 1 371 897 A1 beschreibt einen beleuchteten Bilderrahmen mit einer Leuchtplatte als Hintergrundbeleuchtung, einem darüber angeordneten dekorativen Bild und einem Filter.

Aus DE 199 46 015 A1 ist eine Vorrichtung zum Dimmen einer Lampe bekannt, die aus zwei relativ zueinander verschiebbaren Lochgittern gebildet ist.

Ausgehend hiervon kann es als Aufgabe der vorliegenden Erfindung angesehen werden, die Funktionalität einer Anordnung zur Erzeugung von Lichteffekten zu erhöhen.

Diese Aufgabe wird durch eine Anordnung mit den Merkmalen des Patentanspruches 1 gelöst.

Erfindungsgemäß weist die Anordnung mehrere in Betrachtungsrichtung eines Betrachters zumindest teilweise überlappend angeordnete Flächengebilde auf. Die Betrachtungsrichtung ist im Wesentlichen rechtwinklig zur Erstreckungsebene der Flächengebilde ausgerichtet.

Die Anordnung weist ein Verdunkelungsflächengebilde auf. Das Verdunkelungsflächengebilde weist eine Lichteinfallseite und eine Lichtaustrittseite auf. Die Lichteinfallseite ist einer künstlichen oder natürlichen Lichtquelle zugewandt. Das Verdunkelungsflächengebilde hat wenigstens einen Durchlassbereich und wenigstens einen Abschirmbereich. Das auf das Verdunkelungsflächengebilde auf der Lichteinfallseite auftreffende Licht gelangt zumindest durch den wenigstens einen Durchlassbereich hindurch und tritt aus dem Durchlassbereich an der Lichtaustrittsseite aus. Der wenigstens eine Abschirmbereich kann das Licht nahezu vollständig abschirmen. Im Abschirmbereich kann das Verdunkelungsflächengebilde die Anforderungen an ein sogenanntes "Black-out-Material" erfüllen. Zumindest ist die Intensität des an der Lichtaustrittsseite austretenden Lichts im Durchlassbereich größer als im Abschirmbereich, so dass eine ausreichende Intensitätsdifferenz des Lichts zwischen dem dunkleren Abschirmbereich und dem helleren Durchlassbereich auf der Lichtaustrittsseite gewährleistet ist. Bei einem bevorzugten Ausführungsbeispiel ist das Verdunkelungsflächengebilde durch ein Black-out-Flächengebilde hergestellt, wobei der wenigstens eine Durchlassbereich durch Aussparungen zumindest in der wenigstens einen Verdunkelungslage des Verdunkelungsflächengebildes gebildet ist.

Der wenigstens eine Durchlassbereich kann eine beliebige Gestalt oder Form aufweisen. Auf diese Weise können ein oder mehrere Durchlassbereiche ein Logo, einen Schriftzug, ein Muster oder dergleichen bilden. Es kann auch zur ästhetischen Raumgestaltung verwendet werden. Vorzugsweise ist die gesamte Fläche des einen Durchlassbereichs oder der mehrere Durchlassbereiche zumindest um den Faktor 10 kleiner als die gesamte übrige Fläche des wenigstens einen Abschirmbereichs.

Zur Erzeugung eines Lichtmusters weist die Anordnung außerdem ein Effektflächengebilde auf. Damit kann für einen Betrachter an einer Betrachtungsseite des Effektflächengebildes ein insbesondere dreidimensionaler Lichteffekterzeugt werden. Das Effektflächengebilde ist aus einem Textilmaterial, vorzugsweise einem Gewebe, hergestellt. Durch die Anordnung der Garne bzw. Fäden im Textilmaterial kann der gewünschte Lichteffekt bewirkt werden. Das Effektflächengebilde hat eine dem Verdunkelungsflächengebilde zugewandte Rückseite und eine der Rückseite entgegengesetzte Betrachtungsseite. Das von den Durchlassbereichen des Verdunkelungsflächengebildes austretende Licht trifft auf die Rückseite des Effektflächengebildes auf und wird an den Fäden bzw. Garnen reflektiert und/oder gestreut und/oder gebrochen und/oder gebeugt. Dadurch entsteht in der Betrachtungsrichtung auf der Betrachtungsseite das Lichtmuster bzw. der Lichteffekt.

Durch die Ausgestaltung der erfindungsgemäßen Anordnung ist es möglich, auf der Lichteinfallseite des Verdunkelungsflächengebildes andere als punktförmige bzw. hemisphärische Lichtquellen anzuordnen. Das Verdunkelungsflächengebilde wirkt dabei sozusagen als Blende. Es ist somit möglich, auch komplexere Lichtmuster oder Schriftzüge mit Lichteffekten zu erzeugen. Schließlich kann über das Verdunkelungsflächengebilde auch das natürliche Licht, insbesondere Sonnenlicht als Lichtquelle verwendet werden. Die Anordnung weist zusätzlich zu dem Verdunkelungsflächengebilde und dem Effektflächengebilde ein Divergenzflächengebilde auf, um das parallele Sonnenlicht in divergentes Licht umzuwandeln. Über das Divergenzflächengebilde kann somit an dem wenigstens einen Durchlassbereich hemisphärisch abgestrahltes und vorzugsweise annähernd isotropes Licht erzeugt werden. Das Divergenzflächengebilde und das Verdunkelungsflächengebilde erzeugen im wenigstens einen Durchlassbereich sozusagen eine oder mehrere virtuelle punktförmige Lichtquellen. Bei dieser bevorzugten Ausgestaltung eignet sich die Anordnung auch als Sonnenschutz bzw. zur Beschattung und kann mithin in Sonnenrollos, Sonnenschirmen, Verdunkelungsrollos oder dergleichen Einrichtungen verwendet werden.

Vorzugsweise ist die Intensität des durch den wenigstens einen Durchlassbereich hindurchtretenden Lichts mindestens um das 5- bis 10-fache vorzugsweise um das 10- bis 30-fache größer als die Intensität des durch den wenigstens einen Abschirmbereich hindurchtretenden Lichts.

Bei einer bevorzugten Ausführungsform ist das Divergenzflächengebilde zwischen dem Verdunkelungsflächengebilde und dem Effektflächengebilde angeordnet. Alternativ hierzu kann das Divergenzflächengebilde auch Bestandteil des Verdunkelungsflächengebildes sein.

Vorteilhafterweise liegen das Divergenzflächengebilde und das Verdunkelungsflächengebilde flächig aneinander an und sind beispielsweise stoffschlüssig miteinander verbunden. Zur Erzeugung der Lichteffekte ist es vorteilhaft, wenn das das divergente Licht erzeugende Material des Divergenzflächengebildes sehr nahe an dem wenigstens einen Durchlassbereich angeordnet ist. Außerdem ist die Handhabung der Anordnung vereinfacht, wenn das Divergenzflächengebilde und das Verdunkelungsflächengebilde fest miteinander verbunden sind.

Das Divergenzflächengebilde kann eine Folie und/oder Fasermaterial und/oder Textilmaterial aufweisen. Beispielsweise kann ein Faser- oder Vliesmaterial mit einem ausreichenden Faserabstand zur Streuung des im Wesentlichen parallelen Lichts verwendet werden.

Das Verdunkelungsflächengebilde und/oder das Divergenzflächengebilde und/oder das Effektflächengebilde können jeweils aus einer oder mehreren aneinander anliegenden Lagen bestehen. Dadurch ist es beispielsweise möglich, das Verdunkelungsflächengebilde derart auszugestalten, dass durch die Abschirmbereiche im Wesentlichen kein Licht hindurchtreten kann. Ein mehrlagiges Effektflächengebilde kann zur Erzielung der gewünschten Lichteffekte bzw. Lichtmuster vorteilhaft sein.

Bei einem bevorzugten Ausführungsbeispiel weist das Verdunkelungsflächengebilde eine Trägerlage auf, die beispielsweise aus einem Folienmaterial und/oder oder einem Fasermaterial und/oder einem Textilmaterial bestehen kann. Auf dieser Trägerlage ist wenigstens eine Verdunkelungslage angeordnet. Insbesondere können auf beiden Seiten der Trägerlage jeweils eine oder mehrere Verdunkelungslagen angeordnet sein.

Der wenigstens eine Durchlassbereich kann durch eine Durchbrechung im Verdunkelungsflächengebilde gebildet sein, die sämtliche Lagen des Verdunkelungsflächengebildes ausspart. Es ist alternativ hierzu auch möglich, dass im Durchlassbereich die Trägerlage erhalten bleibt und lediglich die darauf angeordneten Verdunkelungslagen ausgespart sind. Dabei kann die Trägerlage als Divergenzlage und mithin zur Erzeugung des divergenten Lichts dienen. Die Trägerlage kann somit Bestandteil des Divergenzflächengebildes sein oder das Divergenzflächengebilde bilden.

Bei einem bevorzugten Ausführungsbeispiel ist das Verdunkelungsflächengebilde und/oder das Effektflächengebilde auf jeweils einer Wickelwelle auf- und abwickelbar. Alternativ hierzu können das Verdunkelungsflächengebilde und/oder das Effektflächengebilde als Plissee ausgeführt sein und ziehharmonikaähnlich zusammengeschoben bzw. auseinandergezogen werden. Dabei ist es - wie oben erwähnt - möglich, dass das Divergenzflächengebilde fest und flächig mit dem Verdunkelungsflächengebilde verbunden ist.

Der Abstand zwischen dem Verdunkelungsflächengebilde und dem Effektflächengebilde bzw. zwischen dem Verdunkelungsflächengebilde und dem Divergenzflächengebilde kann durch einen Luftspalt und/oder durch eine Verbindungslage gebildet sein. Die Verbindungslage besteht zumindest in dem Bereich, in dem sich das Licht von dem wenigstens einen Durchlassbereich bzw. dem Divergenzflächengebilde bis zur Rückseite des Effektflächengebildes ausbreitet, aus für die verwendete Lichtwellenlänge bzw. den verwendeten Lichtwellenlängenbereich transparentem Material.

Zur Vermeidung der Einstrahlung von störendem Licht kann die Verbindungslage zumindest an einer oder an mehreren Randbereichen soweit technisch möglich lichtundurchlässig ausgeführt sein. Die Verbindungslage kann das Effektflächengebilde mit dem Divergenzflächengebilde bzw. dem Verdunkelungsflächengebilde auch lediglich lokal zur Vorgabe des Abstandes verbinden.

Das Verdunkelungsflächengebilde und das Effektflächengebilde können gemeinsam oder jeweils einen Zugstab aufweisen, der in einer Führungseinrichtung verschiebbar geführt ist. Diese Ausführung kann beispielsweise verwendet werden, wenn das Verdunkelungsflächengebilde und/oder das Effektflächengebilde als Rollo oder als Plissee ausgeführt sind.

Bei einem Ausführungsbeispiel weist das Verdunkelungsflächengebilde zwei relativ zueinander verschiebbare Verdunkelungslagen auf, die jeweils wenigstens einen Durchlassbereich und wenigstens einen Abschirmbereich aufweisen. Vorzugsweise sind die Durchlassbereiche und Abschirmbereiche identisch ausgestaltet bzw. konturiert. Durch eine Relativverschiebung der beiden Verdunkelungslagen kann somit eine vollständige Verdunkelung erreicht werden, wenn der Durchlassbereich der einen Verdunkelungslage mit dem Abschirmbereich der jeweils anderen Verdunkelungslage zur Deckung gelangt. Umgekehrt kann ein maximaler Lichtdurchtritt durch die Durchlassbereiche erreicht werden, wenn sich die beiden Durchlassbereiche der beiden Verdunkelungslagen vollständig decken. Durch diese Ausgestaltung kann die Größe und/oder Form des für den Lichtdurchtritt zur Verfügung stehenden Überdeckungsbereichs zwischen den beiden Durchlassbereichen der beiden Verdunkelungslagen insbesondere stufenlos eingestellt werden.

Vorteilhafte Ausgestaltungen der Erfindung ergeben sich aus den abhängigen Patentansprüchen, der Beschreibung und der Zeichnung.

Nachfolgend werden bevorzugte Ausführungsbeispiele der Erfindung anhand der beigefügten Zeichnung im Einzelnen erläutert. Es zeigen:
Figur 1 eine blockschaltbildähnliche, schematische Darstellung eines Ausführungsbeispiels der Anordnung,
Figur 2 ein Ausführungsbeispiel eines Verdunkelungsflächengebildes und eines Divergenzflächengebildes in schematischer Querschnittsansicht,
Figur 3 ein weiteres Ausführungsbeispiel eines Verdunkelungsflächengebildes in schematischer Querschnittsansicht,
Figur 4 ein Ausführungsbeispiel der Anordnung als Doppelrollo in schematischer Darstellung,
Figur 5 ein Ausführungsbeispiel der Anordnung als Faltenrollo in schematischer Darstellung,
Figuren 6 und 7 ein abgewandeltes Ausführungsbeispiele der Anordnung in einer blockschaltbildähnlichen, schematischen Darstellung mit zwei gegeneinander verschiebbaren Verdunkelungslagen,
Figur 8 ein Ausführungsbeispiel der Anordnung gemäß der Figuren 6 und 7 als Rollo in schematischer Darstellung und
Figur 9 eine schematische Explosionsdarstellung eines Ausführungsbeispiels der Anordnung mit einer Verbindungslage zwischen einem Effektflächengebilde und einem Divergenzflächengebilde.

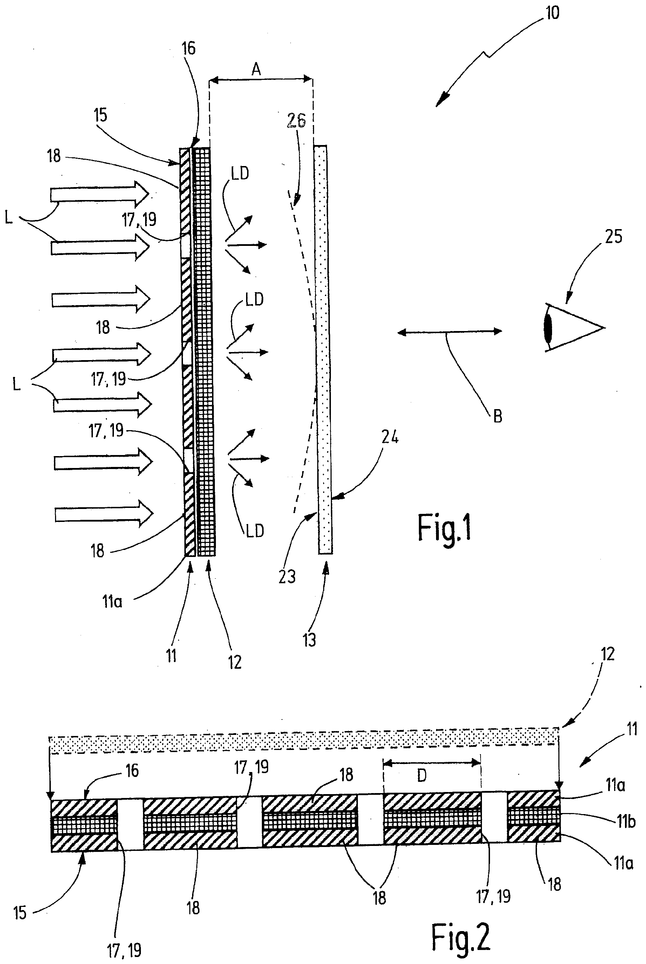

In Figuren 1 und 2 ist schematisch in einer zweiten Ansicht der mehrlagige Aufbau eines Ausführungsbeispiels einer Anordnung 10 zur Erzeugung von Lichteffekten veranschaulicht.

Die Anordnung 10 weist ein Verdunkelungsflächengebilde 11, ein Divergenzflächengebilde 12 und ein Effektflächengebilde 13 auf. Das Verdunkelungsflächengebilde 11 hat eine Lichteinfallseite 15 und eine entgegengesetzte Lichtaustrittsseite 16. Es weist wenigstens ein Durchlassbereich 17 wenigstens einen Abschirmbereich 18 auf. Das Licht L, das von einer künstlichen oder natürlichen Lichtquelle emittiert wird und auf die Lichteinfallseite 15 des Verdunkelungsflächengenbildes 11 auftrifft gelangt zumindest durch den wenigstens einen Durchlassbereich 17 durch das Verdunkelungsflächengebilde 11 hindurch und tritt auf der Lichtaustrittsseite 16 aus. Das Verdunkelungsflächengebilde 11 ist dabei derart ausgestaltet, dass die Intensitätsminderung des an der Lichteinfallseite 15 auftreffenden Lichts in dem wenigstens einen Abschirmbereich 18 deutlich größer und beispielsgemäß mindestens zehnmal größer ist als die Intensitätsminderung des durch den wenigstens einen Durchlassbereich 17 hindurchtretenden Lichts.

Bei dem hier veranschaulichten, bevorzugten Ausführungsbeispiel der Anordnung 10 wird in dem wenigstens einen Abschirmbereich 18 das einfallende Licht L nahezu vollständig abgeschirmt, so dass durch den Abschirmbereich 18 nur ein vernachlässigbarer Lichtanteil hindurchtreten kann. Das Verdunkelungsflächengebilde 11 ist vorzugsweise in dem wenigstens einen Abschirmbereich 18 derart aufgebaut, dass es die Voraussetzungen für ein sogenanntes "Black-out"-Material erfüllt. Der wenigstens eine Durchlassbereich 17 ist durch jeweils eine Aussparung 19 in dem Verdunkelungsflächengebilde 11 gebildet, so dass das Licht L dort ungehindert von der Lichteinfallseite 15 zur Lichtaustrittsseite 16 hindurchgehen kann.

Bei den veranschaulichten Ausführungsbeispielen sind mehrere Aussparungen 19 in Form von zylindrischen Löchern im Verdunkelungsflächengebilde 11 vorhanden. Die Form bzw. Kontur der Aussparungen kann abweichend von einem kreisrunden Querschnitt auch beliebig anders gewählt werden. Die Gesamtquerschnittsfläche des Aussparungen 19 ist kleiner und vorzugsweise um mindestens den Faktor 10 kleiner als die gesamte Fläche des die Aussparungen 19 umgebenden Abschirmbereichs 18. Außerdem ist es beispielsgemäß vorgesehen, dass die Distanz D zwischen zwei unmittelbar benachbarten Aussparungen 19 in einer Raumrichtung, in der sich das Verdunkelungsflächengebilde 11 erstreckt, größer und vorzugsweise mindestens zweimal so groß ist wie die Abmessung der Aussparung 19 in dieser Raumrichtung.

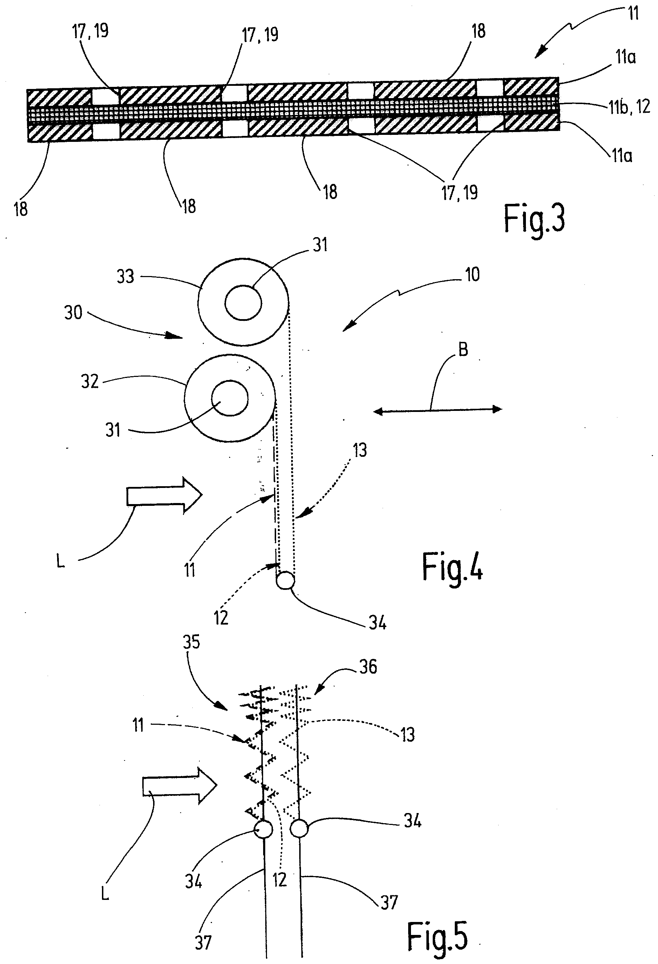

Bei dem Ausführungsbeispiel des Verdunkelungsflächengebildes 11 gemäß Figur 1 ist nur eine einzige Verdunkelungslage 11a vorgesehen. Im Unterschied dazu, sind die Ausführungsbeispiele der Verdunkelungsflächengebilde 11 gemäß der Figuren 2 und 3 mit mehreren Verdunkelungslagen 11a ausgeführt. Bei den dargestellten Ausführungsbeispielen weist das Verdunkelungsflächengebilde 11 eine Trägerlage 11b auf. Auf diese Trägerlage 11b ist auf eine und beispielsgemäß auf beide Seiten jeweils mindestens eine Verdunkelungslage 11a aufgebracht.

Zur Herstellung des Verdunkelungsflächengebildes 11 wird die Trägerschicht 11b bereitgestellt. Die Trägerschicht kann vorzugsweise ein Textilmaterial sein, beispielsweise ein Gewebe oder auch eine Maschenware. Auf die Trägerlage 11b werden anschließend eine oder mehrere Verdunkelungslagen 11a auf einer oder auf beiden Seiten aufgebracht. Die Verdunkelungslagen 11a stehen vorzugsweise aus einem Kunststoffmaterial. Die Anzahl und die Dicke der Verdunkelungslagen wird so gewählt, dass die in dem Abschirmbereich 18 geforderte Abschirmwirkung für das einfallende Licht L erzielt wird.

Zur Herstellung der Aussparungen 19 können anschließend, wie schematisch in Figur 2 veranschaulicht, Durchbrechungen in das Verdunkelungsflächengebilde 11 eingebracht werden, die alle Lagen 11a, 11b vollständig durchsetzen. Dies kann durch Schneiden, beispielsweise Laserschneiden, Stanzen oder einen anderen geeigneten Trennprozess ausgeführt werden.

Alternativ hierzu ist es auch möglich, beim Beschichten der Trägerlage 11b den wenigstens einen Durchlassbereich 17 derart zu maskieren, dass in den aufgebrachten Verdunkelungslagen 11a die Aussparungen 19 entstehen (Figur 3). Die Aussparungen 19 sind dabei lediglich in den Verdunkelungslagen 11a vorhanden und durchsetzen die Trägerlage 11b nicht. Wie in Figur 3 zu erkennen ist, sind die Aussparungen 19 in den Verdunkelungslagen 11b zumindest im Wesentlichen fluchtend in einer Betrachtungsrichtung B angeordnet. Die Betrachtungsrichtung B ist rechtwinklig zur Erstreckungsebene orientiert, in der sich das Verdunkelungsflächengebilde 11 erstreckt. Die Trägerlage 11b kann bei dieser Ausführungsform Bestandteil des Divergenzflächengebildes 12 sein oder dieses bilden. Die Funktion des Divergenzflächengebildes 12 wird nachfolgend erläutert.

Das Divergenzflächengebilde 12 dient dazu, paralleles Licht L zu streuen und im Bereich der Lichtaustrittsseite 16 an dem wenigstens einen Durchlassbereich 17 divergente Lichtstrahlen LD zu erzeugen. Sind die Durchlassbereiche 17 bzw. Aussparungen 19 im Querschnitt ausreichend klein, so entsteht auf der Lichtaustrittsseite 16 an jeder Aussparung 19 in Kombination mit den Divergenzflächengebilde 12 ein virtuelle punktförmige Lichtquelle, die divergenten Lichtstrahlen LD hemisphärisch und vorzugsweise soweit technisch möglich isotrop abstrahlt.

Das Divergenzflächengebilde 12 kann eine Folie und/oder ein Textilmaterial und/oder ein Fasermaterial sein und beispielsweise als Gewebe, Maschenware, Vliesstoff oder Zellstoff ausgeführt sein. Vorzugsweise ist das Divergenzflächengebilde 12 flächig und fest mit dem Verdunkelungsflächengebilde 11 verbunden. Es kann beispielsweise unmittelbar auf der Lichtaustrittsseite 16 des Verdunkelungsflächengebildes 11 angeordnet sein (Figur 1) oder alternativ hierzu als eine Lage in das Verdunkelungsflächengebilde 11 integriert sein. Wie in Figur 3 veranschaulicht, kann das Divergenzgenflächengebilde 12 beispielsweise auch durch die Trägerlage 11b gebildet sein und von einer oder beiden Seiten mit einer Verdunkelungslage 11a beschichtet sein.

Das Verdunkelungsflächengebilde 11 hat somit die Funktion einer Art Blende und erzeugt an dem wenigstens einen Durchlassbereich 17 gemeinsam mit dem Divergenzflächengebilde 12 die divergenten Lichtstrahlen LD. Die divergenten Lichtstrahlen LD treffen auf das Effektflächengebilde 13 auf, das mit Abstand A zum Divergenzflächengebilde 12 angeordnet ist. Das Effektflächengebilde 13 hat eine Rückseite 23, die dem Divergenzflächengebilde 12 bzw. der Lichtaustrittsseite 16 des Verdunkelungsflächengebildes 11 zugewandt ist. Die divergenten Lichtstrahlen LD treffen auf dieser Rückseite 23 auf. Entgegengesetzt zur Rückseite 23 hat das Effektflächengebilde 13 eine Betrachtungsseite 24. Die Betrachtungsseite 24 ist einem Betrachter 25 zugewandt.

Das Effektflächengebilde 13 weist vorzugsweise ein Textilmaterial und/oder ein Fasermaterial und/oder ein Folienmaterial auf. Beispielsweise kann das Effektflächengebilde 13 aus einem oder mehreren Garnen hergestellt sein, beim Ausführungsbeispiel als Gewebe. Die divergenten Lichtstrahlen LD treffen auf der Rückseite 23 auf und werden zumindest teilweise durch das Effektflächengewebe und beispielsgemäß an betreffenden Garnabschnitten gestreut und/oder reflektiert und/oder gebrochen. Durch die Garnkonstruktion und/oder die Anordnung der Garne relativ zueinander kann ein vorgegebener, gewünschter Lichteffekt für den Betrachter 25 erzeugt werden. Insbesondere kann ein dreidimensionaler Lichteffekt 26 entstehen. Abhängig vom Aufbau des Effektflächengewebes 13 bestehen hierbei eine Vielzahl von Möglichkeiten. Beispielsweise können um die virtuellen Lichtquellen an den Aussparungen 19 sternförmige Strahlen erzeugt werden, die sich für den Betrachter 25 auch aus der Ebene des Effektflächengebildes 13 nach hinten in den Raum erstrecken. Auch Ellipsen- oder Linienmuster lassen sich erzeugen.

Dieser räumliche Effekt entsteht nur dann, wenn das auf die Rückseite 23 auftreffende Licht divergent ist. Die erfindungsgemäße Anordnung 10 kann mit beliebigen, natürlichen oder künstlichen Lichtquellen arbeiten. Beispielsweise ist das auf der Erde auftreffende Sonnenlicht parallel, so dass durch das Effektflächengebilde 13 kein Lichteffekt erzeugt werden könnte. Die Anordnung 10 erzeugt aus dem parallelen Licht L die divergenten Lichtstrahlen LD und kann somit auch bei Sonnenlicht einen Lichteffekt 26 erzeugen. Die Anordnung 10 eignet sich daher zur Verwendung bei Sonnenschutzeinrichtungen oder Beschattungseinrichtungen, wie etwa Sonnenschirmen, Sonnensegeln, Rollos oder dergleichen. So kann beispielsweise bei der Verdunkelung eines Raumes am Tag dennoch ein besonderer Lichteffekt an den verdunkelten Fenstern erzeugt werden.

Es ist in Abwandlung zu den hier veranschaulichten Ausführungsbeispielen auch möglich, einen Teil eines Durchlassbereichs 17 bzw. einen oder mehrere der Durchlassbereiche 17 nicht durch das Divergenzflächengebilde 12 abzudecken. Dies kann beispielsweise dadurch bewirkt werden, dass in dem Divergenzflächengebilde 12 ebenfalls eine Aussparung 19 vorgesehen wird. Das Licht wird durch diese Aussparungen dann parallel hindurch auf das Effektflächengebilde 13 auftreffen. Dies kann beispielsweise dazu verwendet werden, Schriftzüge oder Firmenlogos ohne Lichteffekt scharf abzubilden.

Wenn die Anordnung 10 mit einer Lichtquelle betrieben wird, die anstelle von parallelem Licht L divergentes Licht erzeugt, kann das Divergenzflächengebilde 12 auch entfallen.

In den Figuren 4 und 5 sind schematisch zwei Ausführungsbeispiele für eine konstruktive Ausführung der Anordnung 10 veranschaulicht. Bei dem Ausführungsbeispiel nach Figur 4 ist die Anordnung 10 in Form eines Doppelrollos 30 ausgeführt. Das Verdunkelungsflächengebilde 11 und das Divergenzflächengebilde 12 sind unmittelbar aneinander anliegend auf einer gemeinsamen Wickelwelle 31 eines ersten Rollos 32 aufgewickelt. Das Effektflächengebilde 13 ist auf einer Wickelwelle 31 eines zweiten Rollos 33 aufgewickelt. Die beiden Rollos 32, 33 können miteinander gekoppelt sein, so dass sich beim Drehen einer Wickelwelle 31 des einen Rollos 32 oder 33 auch jeweils die Wickelwelle 31 des anderen Rollos 33 bzw. 32 dreht. Dies kann beispielsweise dadurch erreicht werden, dass die Flächengebilde 11, 12, 13 an ihrem jeweiligen freien Ende mit einem gemeinsamen Zugstab 34 verbunden sind. Über den Zugstab wir das aufwickeln und abwickeln ausgelöst. Alternativ oder zusätzlich können die Wickelwellen 31 der beiden Rollos 32, 33 auch über ein Kopplungsmittel, beispielsweise ein Getriebe, einen Riemen oder dergleichen miteinander gekoppelt werden. In diesem Fall kann eine Verbindung des Effektflächengebildes 13 mit den anderen Flcähengebilden 11, 12 entfallen. Ferner ist es in Abwandlung hierzu auch möglich, die beiden Rollos 32, 33 unabhängig voneinander zu bedienen. Die Anordnung der Rollos 32, 33 ist so getroffen, dass sich zwischen dem Effektflächengebilde 13 und dem Divergenzflächengebilde 12 der Abstand A einstellt.

In Figur 5 ist eine weitere konstruktive Ausführungsmöglichkeit für die Anordnung 10 veranschaulicht. Dabei sind keine Rollos 32, 33, sondern Plissees 35, 36 vorgesehen. Ein erstes Plissee 35 ist für das Verdunkelungsflächengebilde 11 und das Divergenzflächengebilde 12 vorhanden, während das zweite Plissee 36 für das Effektflächengebilde 13 vorhanden ist. Die Flächengebilde 11, 12 können dabei ziehharmonikaähnlich zusammengefaltet und auseinandergezogen werden. Vorteilhafterweise sind die Flächengebilde 12, 13 im Wesentlichen vollständig gestreckt, wenn das jeweilige Flächengebilde 11, 12, 13 vollständig auseinandergezogen ist. Jedes Plissee 35, 36 kann einen Zugstab 34 aufweisen, der mit dem jeweils freien Ende der jeweils zugeordneten Flächengebilde 11, 12 bzw. 13 verbunden ist. Der Zugstab 34 kann einer Führungseinrichtung 37 geführt verschiebbar sein. Es ist hierbei auch möglich, die beiden Zugstäbe 34 miteinander zu koppeln oder als gemeinsames Bauteil auszuführen, so dass die Bedienung der Plissees 35, 36 gekoppelt ist.

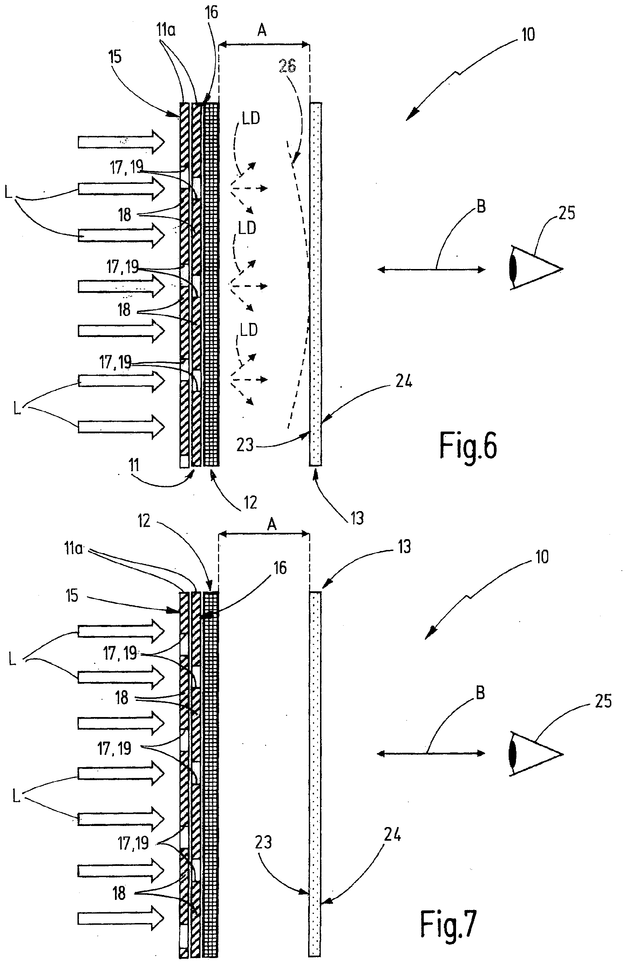

In den Figuren 6 und 7 ist ein weiteres Ausführungsbeispiel der Anordnung 10 schematisch veranschaulicht. Dabei weist das Verdunkelungsflächengebilde 11 zwei quer zur Betrachtungsrichtung B relativ zueinander verschiebbare Verdunkelungslagen 11a auf. Dabei weist jede Verdunkelungslage 11a jeweils wenigstens einen Durchlassbereich 17 und einen Abschirmbereich 18 auf, die vorzugsweise identisch konturiert bzw. gestaltet sind. Durch das Verschieben der beiden Verdunkelungslagen 11a können die Durchlassbereiche 17 miteinander in Deckung oder so gegeneinander verschoben werden, dass der Durchlassbereich 17 einer Verdunkelungslage 11a mit dem Abschirmbereich 18 der jeweils anderen Verdunkelungslage 11 zur Deckung kommt (Figur 7). In dieser Verdunkelungsstellung gelangt kein Licht durch die Durchlassbereiche 17 und die Anordnung 10 kann zur vollständigen Beschattung bzw. Abdunkelung verwendet werden. Wenn sich die Durchlassbereiche 17, also beispielsgemäß die Aussparungen 19, der beiden Verdunkelungslagen 11a zumindest teilweise überdecken, kann ein Lichteffekt 26 erzeugt werden (Figur 6).

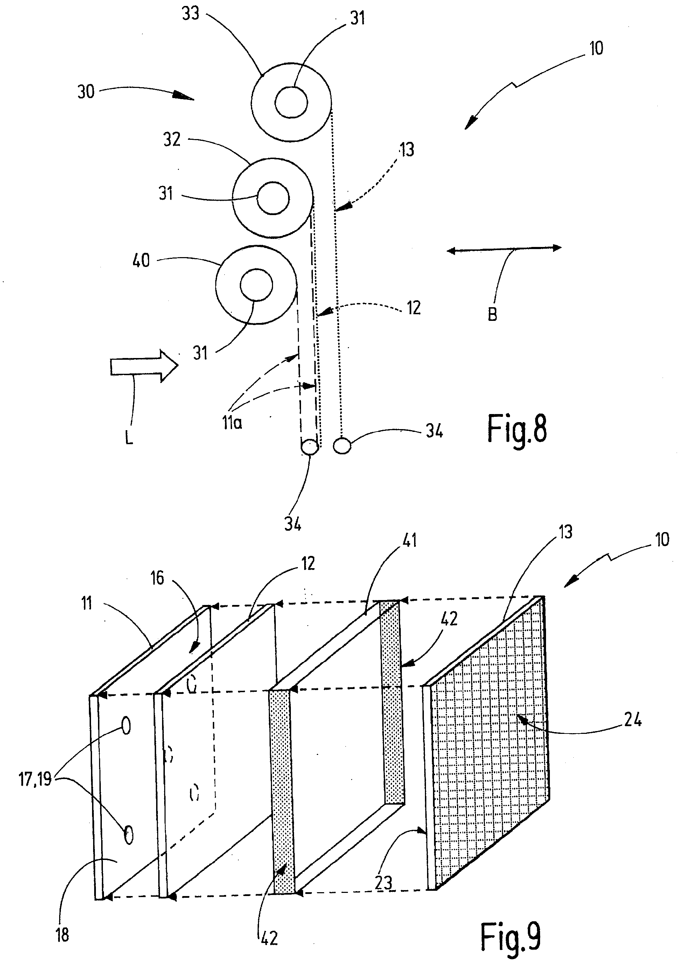

Diese Ausgestaltung kann durch eine Rolloanordnung 30 realisiert werden (Figur 8). Dazu kann beispielsweise im Unterschied zur Ausführung nach Figur 4 ein drittes Rollo 40 vorhanden sein. Auf dem dritten Rollo 40 ist eine Verdunkelungslage 11a aufgewickelt, während auf dem ersten Rollo 32 die jeweils andere Verdunkelungslage 11a aufgewickelt ist. Eine der beiden Verdunkelungslagen 11a kann wie in Figur 8 veranschaulicht mit dem Divergenzflächengebilde 12 verbunden sein. Durch eine Relativverdrehung der beiden Wickelwellen 31 des ersten Rollos 32 und des dritten Rollos 40 zueinander, kann die gewünschte Relativlage zwischen den beiden Verdunkelungslagen 11a wie anhand der Figuren 6 und 7 erläutert eingestellt werden. Den beiden Verdunkelungslagen 11a kann ein gemeinsamer Zugstab 34 zugeordnet sein, es können für jedes Rollo 32, 40 auch separate Zugstäbe 34 vorgesehen werden. Im Übrigen entspricht die Rolloanordnung 30 nach Figur 8 der Rolloanordnung 30 aus Figur 4, so dass auf die vorstehende Beschreibung verwiesen werden kann.

Es ist schließlich auch möglich, die Anordnung 10 mit zwei zueinander verschiebbaren Verdunkellungslagen 11a durch Plissees auszuführen. In Abwandlung zu dem in Figur 5 veranschaulichten Ausführungsbeispiel kann ein zusätzliches Plissee mit der zusätzlichen Verdunkelungslage 11a vorgesehen werden.

Bei den bislang beschriebenen Ausführungsbeispielen ist zwischen dem Effektflächengebilde 13 und dem Verdunkelungsflächengebilde 11 bzw. dem optionalen Divergenzflächengebilde 12 der Abstand A durch einen Luftspalt gebildet. Es ist in Abwandlung hierzu bei allen Ausführungsbeispielen möglich, zwischen dem Effektflächengebilde 13 und dem Divergenzflächengebilde 12 bzw. dem Verdunkelungsflächengebilde 11 eine Verbindungslage 41 anzuordnen. Die Verbindungslage 41 kann beispielsweise aus für die von der Lichtquelle L stammenden Lichtwellenlänge bzw. dem Lichtwellenlängenbereich transparente Material hergestellt sein. Vorzugsweise ist die Verbindungslage 41 für alle Lichtwellenlängen des sichtbaren Lichts durchlässig. Es ist allerdings auch möglich, die Verbindungslage 41 zur Einstellung einer gewünschten Lichtfarbe als Farbfilter auszuführen.

Wie in Figur 9 veranschaulicht, können durch die Verwendung einer Verbindungslage 41 alle Flächengebilde 11, 12, 13 miteinander verbunden sein, so dass die Anordnung 10 beispielsweise mit einem einzigen Plissee oder Rollo realisiert werden kann. Die Verbindungslage 41 kann zumindest außerhalb des Lichtabstrahlbereichs der divergenten Lichtstrahlen LD teilweise lichtundurchlässig ausgeführt sein. In Figur 9 ist schematisch veranschaulicht, dass eine oder mehrere randseitigen Bereiche, beispielsweise die Randflächen 42 für das sichtbare Licht undurchlässig oder zumindest nahezu undurchlässig ausgeführt sind. Dadurch kann ein Eindringen von Störlicht in den Bereich zwischen das Effektflächengebilde 13 und das Divergenzflächengebilde 12 bzw. das Verdunkelungsflächengebilde 11 gemindert oder verhindert werden. Auch andere Mittel, beispielsweise Schienen oder Blenden oder dergleichen an der Rolloanordnung 30 oder an der Plisseeanordnung 35, 36 können verwendet werden, um das Eindringen von störendem Licht in diesem Bereich zu vermeiden. Solche Mittel können beispielsweise an einer Führungseinrichtung zur Führung eines Zugstabes 34 eines Rollos bzw. eines Plissees angeordnet sein.

Es ist ferner möglich, anstelle von Rollos oder Plissees andere mechanische Vorrichtungen für die Flächengebilde 11, 12, 13 zu verwenden. Beispielsweise können die Flächengebilde 11, 12, 13 in verschiebbaren und/oder verschwenkbarem Rahmen gehalten werden. Das Verdunkelungsflächengebilde 11 kann auch von einem herkömmlichen Lamellenrolladen gebildet sein, wobei die dort vorhandenen Schlitzöffnungen die Durchlassbereiche 17 darstellen. Das gewünschte Effektflächengebilde 13 kann durch ein Rollo, Plissee oder dergleichen am Fenster eingebracht werden, um einen gewünschten Lichteffekt 26 zu erzeugen. Das Divergenzflächengebilde 12 kann dabei aus mehreren einzelnen Streifen bestehen, die auf die Schlitzöffnungen im Rolladen geklebt werden.

In Abwandlung zu den beschriebenen Ausführungsbeispielen ist es möglich, dass das Divergenzflächengebilde 12 aus mehreren Teilen besteht, wobei jeder Teil einem Durchlassbereich 17 zugeordnet ist. Die Teile können unmittelbar miteinander verbunden sein oder separat mit dem Verdunkelungsflächengebilde 11 verbunden sein, so dass zwischen den Teilen lediglich eine mittelbare Verbindung besteht.

Die Erfindung betrifft eine Anordnung 10 zur Erzeugung eines Lichteffekts 26 auf einer Betrachtungsseite 24 eines Effektflächengebildes 13. Hierfür ist mit Abstand auf einer der Betrachtungsseite 24 abgewandten Rückseite 23 zum Effektflächengebilde 13 ein Verdunkelungsflächengebilde 11 sowie vorzugsweise ein Divergenzflächengebilde 12 angeordnet. Das Verdunkelungsflächengebilde 11 weist wenigsten einen Durchlassbereich 17 und wenigstens einen Abschirmbereich 18 auf. Auf der dem Effektflächengebilde 13 abgewandten Lichteinfallseite 15 trifft L auf das Verdunkelungsflächengebilde 11 auf und wird in dem wenigstens einen Abschirmbereich 18 zumindest stark gemindert oder vollständig abgeschirmt. Das Licht L kann durch den wenigstens einen Durchlassbereich 17 hindurchtreten. Mittels dem Divergenzflächengebilde 12 werden divergente Lichtstrahlen LD an dem jeweiligen Durchlassbereich 17 erzeugt, die auf die Rückseite 23 des Effektflächengebildes 13 auftreffen und für einen Betrachter 25 mit Blick auf die Betrachtungsseite 24 einen Lichteffekt 26 erzeugen.

### Bezugszeichenliste:

- 10: Anordnung
- 11: Verdunkelungsflächengebilde
- 11a: Verdunkelungslage
- 11b: Trägerlage
- 12: Divergenzflächengebilde
- 13: Effektflächengebilde

- 15: Lichteinfallseite
- 16: Lichtaustrittsseite
- 17: Durchlassbereich
- 18: Abschirmbereich
- 19: Aussparung

- 23: Rückseite
- 24: Betrachtungsseite
- 25: Betrachter
- 26: Lichteffekt

- 30: Doppelrollo
- 31: Wickelwelle
- 32: erstes Rollo
- 33: zweites Rollo
- 34: Zugstab
- 35: erstes Plissee
- 36: zweites Plissee
- 37: Führungseinrichtung

- 40: drittes Rollo
- 41: Verbindungslage
- 42: Kantenfläche
- A: Abstand
- B: Betrachtungsrichtung
- D: Distanz
- L: Licht
- LD: divergente Lichtstrahlen

## Patentansprüche

1. Anordnung (10) zur Erzeugung eines Lichteffekts (26),
mit mehreren in einer Betrachtungsrichtung (B) zumindest teilweise überlappend angeordneten Flächengebilden (11, 12, 13),
mit einem Verdunkelungsflächengebilde (11), die eine Lichteinfallseite (15) und eine Lichtaustrittsseite (16) aufweist, und die wenigstens einen Durchlassbereich (17) und wenigstens einen Abschirmbereich (18) aufweist, wobei das auf der Lichteinfallseite (15) auftreffende Licht (L) zumindest durch den wenigstens einen Durchlassbereich (17) hindurchgeht und auf der Lichtaustrittsseite (16) austritt,
wobei die Intensitätsminderung des an der Lichteinfallseite (15) auf den wenigstens einen Abschirmbereich (18) auftreffenden Lichts (L) größer ist als die Intensitätsminderung des auf den wenigstens einen Durchlassbereich (17) auftreffenden Lichts (L),
mit wenigstens einem Effektflächengebilde (13) aus einem Textilmaterial, das eine der Lichtaustrittsseite (16) des Verdunkelungsflächengebildes (11) zugewandte Rückseite (23) und eine Betrachtungsseite (24) aufweist, wobei das Effektflächengebilde (13) mit einem Abstand zum Verdunkelungsflächengebilde (11) angeordnet ist, und wobei das an der Rückseite (23) auftreffende Licht zumindest teilweise reflektiert und/oder gestreut und/oder gebrochen und/oder gebeugt wird und zumindest teilweise an der Betrachtungsseite (24) austritt, mit einem Divergenzflächengebilde (12), das dazu eingerichtet ist, einfallendes im Wesentlichen paralleles Licht (L) in divergentes Licht (LD) umzuwandeln, **dadurch gekennzeichnet, dass** das Divergenzflächengebilde (12) ein Folienmaterial und/oder Fasermaterial und/oder Textilmaterial aufweist.

2. Anordnung nach Anspruch 1,
**dadurch gekennzeichnet, dass** der wenigstens eine Durchlassbereich (17) durch eine Aussparung (19) in dem Verdunkelungsflächengebilde (11) gebildet ist.

3. Anordnung nach Anspruch 1 oder 2,
**dadurch gekennzeichnet, dass** der wenigstens eine Abschirmbereich (18) das einfallende Licht im Wesentlichen vollständig abschirmt.

4. Anordnung nach einem der vorhergehenden Ansprüche, **dadurch gekennzeichnet, dass** die Intensität des durch den wenigstens einen Durchlassbereich (17) hindurchgehenden Lichts mindestens um das 5-fache bis 10-fache oder das 10- bis 30-fache größer ist als die Intensität des durch den wenigstens einen Abschirmbereich (18) hindurchgehenden Lichts.

5. Anordnung nach einem der vorhergehenden Ansprüche, **dadurch gekennzeichnet, dass** das Divergenzflächengebilde (12) zwischen dem Verdunkelungsflächengebilde (11) und dem Effektflächengebilde (13) angeordnet ist.

6. Anordnung nach einem der vorhergehenden Ansprüche, **dadurch gekennzeichnet, dass** das Divergenzflächengebilde (12) und das Verdunkelungsflächengebilde (11) aneinander anliegen.

7. Anordnung nach einem der vorhergehenden Ansprüche, **dadurch gekennzeichnet, dass** das Verdunkelungsflächengebilde (11) aus mehreren flächig aneinander anliegenden Lagen (11a, 11b) besteht.

8. Anordnung nach Anspruch 7,
**dadurch gekennzeichnet, dass** das Verdunkelungsflächengebilde (11) eine Trägerlage (11b) auf, an der wenigstens eine Verdunkelungslage (11a) angeordnet ist.

9. Anordnung nach Anspruch 8,
**dadurch gekennzeichnet, dass** sich die Trägerlage (11b) nur im wenigstens einen Abschirmbereich (18) erstreckt und den wenigstens einen Durchlassbereich (17) freilässt.

10. Anordnung nach Anspruch 8,
**dadurch gekennzeichnet, dass** sich die Trägerlage (11b) in dem wenigstens einen Durchlassbereich (17) erstreckt und zumindest eine Lage des Divergenzflächengebildes (12) bildet.

11. Anordnung nach einem der vorhergehenden Ansprüche,
**dadurch gekennzeichnet, dass** das Verdunkelungsflächengebilde (11) und/oder das Effektflächengebilde (13) auf jeweils einer Wickelwelle (31) auf- und abwickelbar sind und/oder zusammen- und auseinanderziehbar gefaltet sind.

12. Anordnung nach Anspruch 11,
**dadurch gekennzeichnet, dass** das Verdunkelungsflächengebilde (11) und/oder das Effektflächengebilde (13) jeweils einen Zugstab (34) aufweist, der in jeweils einer Führungseinrichtung (37) verschiebbar geführt ist.

13. Anordnung nach einem der vorhergehenden Ansprüche,
**dadurch gekennzeichnet, dass** das Verdunkelungsflächengebilde (11) zwei relativ zueinander verschiebbare Verdunkelungslagen (11a) aufweist, die jeweils wenigstens einen Durchlassbereich (17) und wenigstens einen Abschirmbereich (18) aufweisen.

## Claims

1. Arrangement (10) for generating a light effect (26),
with several surface structures (11, 12, 13) arranged at least partially overlapping in an observation direction (B),
with a darkening surface structure (11) which has a light incidence side (15) and a light emergence side (16), and which comprises at least one passage region (17) and at least one screening region (18), wherein the light (L) hitting the light incidence side (15) passes at least partially through the at least one passage region (17) and emerges on the light emergence side (16),
wherein the intensity reduction of the light (L) hitting the at least one screening region (18) on the light incidence side (15) is greater than the intensity reduction of the light (L) hitting the at least one passage region (17),
with at least one effect surface structure (11) made of a textile material which comprises a back side (23) facing the light emergence side (16) of the darkening surface structure (11) and an observation side (24), wherein the effect surface structure (13) is arranged at a distance from the darkening surface structure (11), and wherein the light hitting the back side (23) is at least partially reflected and/or scattered and or refracted and/or bent, and emerges at least partially at the observation side (24),
with a divergence surface structure (12) which is configured to convert at least substantially parallel incident light (L) into divergent light (LD),
**characterised in that** the divergence surface structure (12) comprises a film material and/or fibre material and/or textile material.

2. Arrangement according to claim 1, **characterised in that** the at least one passage region (17) is formed by an opening (19) in the darkening surface structure (11).

3. Arrangement according to claim 1 or 2, **characterised in that** the at least one screening region (18) screens out the incident light substantially completely.

4. Arrangement according to any of the preceding claims, **characterised in that** the intensity of the light passing through the at least one passage region (17) is at least 5 times to 10 times, or 10 times to 30 times greater than the intensity of the light passing through the at least one screening region (18).

5. Arrangement according to any of the preceding claims, **characterised in that** the divergence surface structure (12) is arranged between the darkening surface structure (11) and the effect surface structure (13).

6. Arrangement according to any of the preceding claims, **characterised in that** the divergence surface structure (12) and the darkening surface structure (11) adjoin each other.

7. Arrangement according to any of the preceding claims, **characterised in that** the darkening surface structure (11) consists of several layers (11a, 11b) lying on each other superficially.

8. Arrangement according to claim 7, **characterised in that** the darkening surface structure (11) has a carrier layer (11b) on which at least one darkening layer (11a) is arranged.

9. Arrangement according to claim 8, **characterised in that** the carrier layer (11b) extends only in at least one screening region (18) and leaves the at least one passage region (17) clear.

10. Arrangement according to claim 8, **characterised in that** the carrier layer (11b) extends into the at least one passage region (17) and forms at least one layer of the divergence surface structure (12).

11. Arrangement according to any of the preceding claims, **characterised in that** the darkening surface structure (11) and/or the effect surface structure (13) can each be wound onto and unwound from a winding shaft (31) and/or are folded so they can be drawn together and pulled apart.

12. Arrangement according to claim 11, **characterised in that** the darkening surface structure (11) and/or the effect surface structure (13) each have a pull rod (34) which is guided so as to be movable in at least one guide device (37).

13. Arrangement according to any of the preceding claims, **characterised in that** the darkening surface structure (11) has two darkening layers (11a) which can be moved relative to each other and each have at least one passage region (17) and at least one screening region (18).

## Revendications

1. Système (10) de génération d'un effet lumineux (26),
comprenant plusieurs structures planes (11, 12, 13) disposées de manière à se chevaucher au moins partiellement dans une direction d'observation (B),
comprenant une structure plane d'obscurcissement (11) qui présente une face d'incidence de lumière (15) et une face de sortie de lumière (16), et qui comporte au moins une zone de passage (17) et au moins une zone formant écran (18), sachant que la lumière (L) qui arrive sur la face d'incidence de lumière (15) traverse au moins la zone de passage (17), au nombre d'au moins une, et sort sur la face de sortie de lumière (16),
la diminution d'intensité de la lumière (L) arrivant sur la face d'incidence de lumière (15), dans la zone formant écran (18), au nombre d'au moins une, étant plus grande que la diminution d'intensité de la lumière (L) arrivant sur la zone de passage (17), au nombre d'au moins une,
comprenant au moins une structure plane d'effet (13) faite d'une matière textile qui présente une face arrière (23), tournée vers la face de sortie de lumière (16) de la structure plane d'obscurcissement (11), et une face d'observation (24), la structure plane d'effet (13) étant disposée à distance de la structure plane d'obscurcissement (11), et la lumière qui arrive sur la face arrière (23) étant au moins en partie réfléchie et/ou dispersée et/ou diffractée et/ou réfractée, et sortant au moins en partie sur la face d'observation (24),
comprenant une structure plane de divergence (12) qui est conçue pour transformer la lumière (L) incidente, sensiblement parallèle, en lumière divergente (LD),
**caractérisé en ce que**
la structure plane de divergence (11) présente un matériau en feuille et/ou un matériau en fibres et/ou une matière textile.

2. Système selon la revendication 1, **caractérisé en ce que** la zone de passage (17), au nombre d'au moins une, est formée par un évidement (19) dans la structure plane d'obscurcissement (11).

3. Système selon la revendication 1 ou 2, **caractérisé en ce que** la zone formant écran (18), au nombre d'au moins une, bloque sensiblement complètement la lumière incidente.

4. Système selon l'une des revendications précédentes, **caractérisé en ce que** l'intensité de la lumière traversant la zone de passage (17), au nombre d'au moins une, est supérieure d'au moins 5 à 10 fois ou de 10 à 30 fois à l'intensité de la lumière traversant la zone formant écran (18), au nombre d'au moins une.

5. Système selon l'une des revendications précédentes, **caractérisé en ce que** la structure plane de divergence (12) est disposée entre la structure plane d'obscurcissement (11) et la structure plane d'effet (13).

6. Système selon l'une des revendications précédentes, **caractérisé en ce que** la structure plane de divergence (12) et la structure plane d'obscurcissement (11) sont appliquées l'une contre l'autre.

7. Système selon l'une des revendications précédentes, **caractérisé en ce que** la structure plane d'obscurcissement (11) constituée de plusieurs couches (11a, 11b) appliquées à plat les unes contre les autres.

8. Système selon la revendication 7, **caractérisé en ce que** la structure plane d'obscurcissement (11) présente une couche de support (11b) sur laquelle est disposée au moins une couche d'obscurcissement (11a).

9. Système selon la revendication 8, **caractérisé en ce que** la couche de support (11b) ne s'étend que dans la zone formant écran (18), au nombre d'au moins une, et laisse dégagée la zone de passage (17), au nombre d'au moins une.

10. Système selon la revendication 8, **caractérisé en ce que** la couche de support (11b) s'étend dans la zone de passage (17), au nombre d'au moins une, et constitue au moins une couche de la structure plane de divergence (12).

11. Système selon l'une des revendications précédentes, **caractérisé en ce que** la structure plane d'obscurcissement (11) et/ou la structure plane d'effet (13) peuvent être enroulées et déroulées respectivement sur un arbre d'enroulement (31) et/ou sont pliées avec possibilité de repliage et de dépliage.

12. Système selon la revendication 11, **caractérisé en ce que** la structure plane d'obscurcissement (11) et/ou la structure plane d'effet (13) présentent respectivement une barre de traction (34) qui est guidée de manière coulissante respectivement dans un dispositif de guidage (37).

13. Système selon l'une des revendications précédentes, **caractérisé en ce que** la structure plane d'obscurcissement (11) présente deux couches d'obscurcissement (11a) qui peuvent être déplacées l'une par rapport à l'autre et qui comportent chacune au moins une zone de passage (17) et au moins une zone formant écran (18).
